# FASCICULE DE BREVET EUROPEEN

(11) **EP 0 892 185 B1**
(45) Date de publication et mention de la délivrance du brevet: **07.07.2010**
(21) Numéro de dépôt: 98402513.0
(22) Date de dépôt: 17.12.1993
(51) Int. Cl.: F16C 33/78, F16C 41/00

(54) **Joint d'étanchéité à codeur incorporé ; roulement comportant un tel joint**
Dichtung mit integriertem Signalgeber; Lager mit einer solchen Dichtung
Seal with integrated encoder; bearing including such a seal

(30) Priorité: 19.01.1993 FR 9300458
(43) Date de publication de la demande: 20.01.1999
(62) Demande divisionnaire de: 93403068.5
(73) Titulaire: S.N.R. ROULEMENTS, F-74010 Annecy Cedex (FR)
(72) Inventeur: Hajzler, Christian, 74330 Poisy (FR)
(74) Mandataire: Novagraaf Technologies

(56) Documents cités:
- EP-A- 0 371 836
- EP-A- 0 378 939
- EP-A- 0 495 323
- EP-A1- 0 323 789
- DE-A- 3 735 070
- DE-A- 3 809 904
- FR-A- 2 574 501
- US-A- 5 042 822
- PATENT ABSTRACTS OF JAPAN vol. 013, no. 194 (M-823), 10 mai 1989 (1989-05-10) & JP 01 021219 A (NIPPON SEIKO KK), 24 janvier 1989 (1989-01-24)

## Description

L'invention concerne un joint d'étanchéité à codeur incorporé dans lequel un disque tournant porte ledit codeur à aimantation multipolaire pour générer un champ magnétique apte à se déplacer devant un capteur fixe.

La publication EP-A-495323 décrit un joint d'étanchéité qui possède un déflecteur tournant recouvert ou réalisé en un matériau aimanté. La figure 4 du document EP-A-495 323 représente un roulement à capteur d'informations ayant une bague fixe et une bague tournante. Sur la bague fixe est montée une armature fixe et sur la bague mobile est montée une armature mobile. Les deux armatures délimitent axialement entre elles une chambre annulaire. L'armature mobile comporte un disque et, solidaire, une portée cylindrique destinée à être emmanchée sur la bague tournante. Dans cette réalisation, le capteur d'informations est intégré au roulement.

Lorsque le fonctionnement du capteur nécessite un champ magnétique important, l'encombrement axial du codeur doit être augmenté. Selon la publication FR-A-2 660 975 la face intérieure du disque tournant est orientée vers la garniture d'étanchéité, tandis que la face extérieure du disque porte le codeur. La dimension axiale globale d'un tel joint ne permet plus la réalisation de roulements ou de paliers étanches dont l'encombrement axial est déterminé à l'avance.

Le document FR-A-2574501 concerne également un roulement à capteur d'informations intégré. Il est prévu, s'agissant du codeur, qu'il peut être formé à partir d'une feuille d'acier à faible teneur en carbone ferro-magnétique revêtue d'une couche mince de ferrite et de liant polymérisé.

La figure 3 du document EP 323 789 A montre un joint d'étanchéité à codeur incorporé monté avec une nervure dans une gorge annulaire d'une bague extérieure tournante d'un roulement. Le joint d'étanchéité porte une lèvre axi-radiale en contact avec une portée conique d'une bague intérieure fixe. Le codeur se trouve dans la région des face latérales des bagues du roulement.

L'invention a pour objet un roulement et un palier étanche dans lequel la position axiale du joint d'étanchéité demeure sans effet sur la dimension globale dudit roulement ou palier.

L'invention a également pour objet un roulement et un palier dont l'étanchéité est améliorée au niveau des liaisons du joint avec le élément fixe dudit roulement ou palier.

L'invention a encore pour objet un joint d'étanchéité compact comportant une garniture d'étanchéité à lèvres souples, dont le codeur peut être aisément fabriqué à partir d'un élastomère chargé de particules de ferrite.

Selon l'invention , il est proposé un joint d'étanchéité à codeur incorporé selon la revendication 1.

Le joint d'étanchéité ainsi réalisé possède l'avantage de pouvoir être monté de façon étanche dans un roulement sans précautions particulières.

Le codeur incorporé au joint possèdera cependant un volume suffisant pour que le champ magnétique puisse être aisément lu par un capteur.

D'autres caractéristiques et avantage de l'invention apparaîtront à la lecture de la description d'exemples de réalisations des montages du joint en référence au dessin annexé dans lequel :
- la figure 1 est une vue en coupe radiale d'un ensemble préassemblé formant joint d'étanchéité à codeur incorporé monté entre un arbre tournant et un carter fixe ;
- la figure 2 représente une variante de réalisation du montage représenté à la figure 1 ;
- la figure 3 représente une version simplifiée du joint d'étanchéité à codeur.

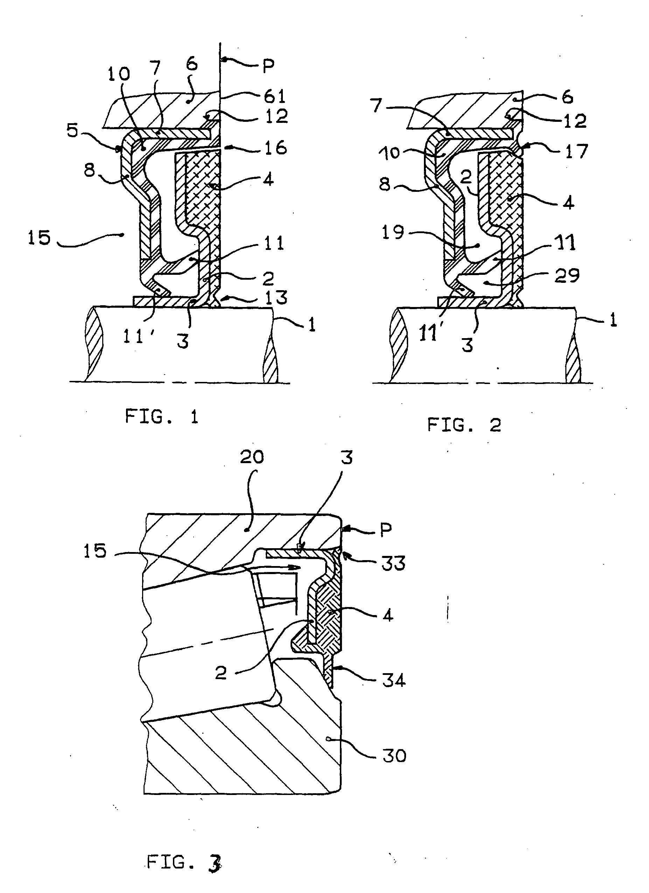

Les figures 1 et 2 sont décrites en rue de la compréhension de la figure 3 qui représente un joint selon l'invention.

Ainsi que cela est montré à la figure 1 et 2 un arbre support tournant 1 porte un disque radial 2 solidaire d'une portée cylindrique 3 emmanchée sur l'arbre 1. Une face du disque 2 est recouverte par un élastomère chargé de particules magnétiques qui constitue l'élément codeur 4.

Le disque 2 et sa portée cylindrique 3 constituent conjointement une armature intérieure localisée dans une armature extérieure fixe 5 montée sur un support 6. L'armature extérieure fixe 5 possède également une portée de montage 7 encastrée dans le support 6 et un disque radial fixe 8 orienté vers l'axe de rotation de l'arbre 1.

Le disque 8 porte un revêtement élastomère 10 d'étanchéité surmoulé qui possède ici une lèvre axiale 11 et une lèvre radiale 11' respectivement en appui sur la face libre du disque 2 et sur la surface extérieure de la portée 3. La limite du revêtement 10 raccordée à la porte de montage 7 possède une nervure circulaire 12 encastrée dans un lamage ou sur un chanfrein du support 6.

La surface latérale extérieure de l'élément codeur 4 est raccordée à une lèvre radiale d'étanchéité 13 fixée au disque 2 et en appui sur l'arbre 1 et est sensiblement confondue avec le plan p de la face latérale 61 du support 6.

L'ensemble des disques 2, 8 munis de leurs revêtements 4, 10 est monté dans une cavité annulaire 15 axialement limitée par le plan p.

Selon une caractéristique du montage représenté à la figure 1, la surface périphérique de l'ensemble constitué par le disque 2 et par l'élément codeur 4 est radialement séparée du revêtement élastomère 10 par un interstice 16.

Par ailleurs, la surface périphérique de l'ensemble disque 2-codeur 4 peut être encastrée sous une lèvre d'étanchéité 17 fixe portée par le revêtement 10 et au contact de l'élément codeur tournant 4 ainsi que cela est représenté à la figure 2.

Par ailleurs, les disques 2, 8 délimitent des cavités annulaires 19, 29 remplies d'un liquide magnétique maintenu en place par le magnétisme de l'élément codeur 4. Ce liquide peut également être contenu dans l'interstice 16. La présence de ferrite améliore de la sorte l'étanchéité du joint.

Le disque 2 peut également être réalisé en matériau magnétique dans le but d'assurer une concentration du champ et du flux magnétique émis par l'élément codeur 4.

La figure 3 décrit un montage simplifiée à joint d'étanchéité à codeur sur les bagues 30 fixe intérieure et 20 tournante extérieure du roulement selon l'invention.

Le disque 2 se prolonge extérieurement par une portée cylindrique de montage 3 dans la cavité 15 délimitée entre les bagues 20, 30 et le plan p de la face latérale du roulement.

L'élément codeur 4 porte :
- une lèvre d'étanchéité radiale extérieure 33 en contact avec l'alésage de la bague tournante ;
- une lèvre axi-radiale 34 en contact avec une portée conique de la bague fixe 30.

## Revendications

1. Joint d'étanchéité à codeur incorporé monté entre un support fixe (30) et un support tournant (20) d'un roulement ou d'un palier :
- comportant une armature mobile ayant un disque (2) ;
- l'élément codeur magnétique (4) étant supporté par le disque (2) et formé par un élastomère chargé de particules magnétiques recouvrant la face extérieure du disque (2) ;
- l'élément codeur magnétique (4) portant une lèvre d'étanchéité (33) radiale extérieure, fixée au disque (2) et en appui sur le support tournant (20) ;
- l'élément codeur magnétique (4) portant une lèvre (34) axi-radiale en contact avec une portée conique du support fixe (30) ;
- le disque (2) étant solidaire d'une portée cylindrique (3) emmanchée sur le support mobile (20) ;
- la face extérieure de l'élément codeur magnétique (4) étant sensiblement contenue dans le plan P d'une face latérale d'au moins un des supports (20, 30),
- le disque (2) comprenant une première et une seconde paroi décalée axialement vers l'extérieur par rapport à la première paroi, la seconde paroi étant adjacente à la portée cylindrique (3).

2. Joint selon la revendication 1 **caractérise en ce que** l'élastomère chargé de particules magnétiques forme une saillie vers l'intérieur du disque (2) et vers la lèvre (34).

## Claims

1. A gasket with an integrated encoder mounted between a fixed support (30) and a rotating support (20) of a bearing or a roller:
- including a loose basis with a disk (2);
- the magnetic encoding element (4) being supported by the disk (2) and made of elastomer filled with magnetic particles covering the external face of the disk (2);
- the magnetic encoding element (4) having an external radial sealing lip (33) fixed to the disk (2) and resting on the rotating support (20);
- the magnetic encoding element (4) having an axially radial lip (34) in contact with a conical seat of the fixed support (30);
- the disk (2) being integral with a cylindrical seat (3) fitted on the loose support (20);
- the external face of the magnetic encoding element (4) being substantially contained within the plane P of a lateral face of at least one of the supports (20, 30),
- the disk (2) including a first and a second wall axially shifted outwards with respect to the first wall, the second wall being adjacent to the cylindrical seat (3).

2. A gasket according to claim 1, **characterised in that** the elastomer filled with magnetic particles makes a protrusion towards the inside of the disk (2) and towards the lip (34).

## Patentansprüche

1. Dichtung mit integriertem Codierer, die zwischen einem festen Träger (30) und einem drehenden Träger (20) eines Wälzlagers oder eines Lagers montiert ist:
- die ein mobiles Gestell mit einer Scheibe (2) umfaßt;
- wobei das magnetische Codiererelement (4) von der Scheibe (2) getragen und von einem mit magnetischen Partikeln beladenen Elastomer geformt wird, das die Außenseite der Scheibe (2) abdeckt;
- wobei das magnetische Codiererelement (4) eine radiale äußere Dichtlippe (33) trägt, die an der Scheibe (2) befestigt ist und auf dem drehenden Träger (20) aufliegt;
- wobei das magnetische Codiererelement (4) eine axi-radiale Lippe (34) trägt, die mit einer kegelförmigen Tragfläche des festen Trägers (30) in Berührung ist;
- wobei die Scheibe (2) fest mit einer zylinderförmigen Tragfläche (3) verbunden ist, die auf den mobilen Träger (20) aufgesetzt ist;
- wobei die Außenseite des magnetischen Codiererelement (4) etwa in der Ebene P einer Seitenfläche von mindestens einem der Träger (20, 30) enthalten ist;
- wobei die Scheibe (2) eine erste und eine zweite im Verhältnis zur ersten Wand axial nach außen verschobene Wand umfaßt, wobei die zweite Wand an die zylinderförmige Tragfläche (3) anschließt.

2. Dichtung nach Anspruch 1, **dadurch gekennzeichnet, daß** das mit magnetischen Partikeln beladenen Elastomer einen Vorsprung nach dem Innern der Scheibe (2) und zur Lippe (34) bildet.
